# EUROPEAN PATENT APPLICATION

(11) **EP 4 389 420 A1**
(43) Date of publication of application: **26.06.2024**
(21) Application number: 22214804.1
(22) Date of filing: 20.12.2022
(51) Int. Cl.: B32B 27/22, B32B 27/30, B32B 27/08, B32B 17/10

(54) **POLYVINYL ACETAL FILMS WITH IMPROVED STIFFNESS**

(71) Applicant: Kuraray Europe GmbH, 65795 Hattersheim (DE)
(72) Inventor: Haerth, Michael, 53859 Niederkassel (DE); Ebeling, Bastian, 53840 Troisdorf (DE)
(74) Representative: Janßen, Christian Oliver

(57) **Abstract**

The present invention relates to a process for the production of a polyvinyl acetal film comprising a plasticized polyvinyl acetal film prepared by melt extrusion combined with multiple layers of a polyvinyl acetal film with no or very low amounts of plasticizer prepared by solvent casting as well as the use of such polyvinyl acetal films in structural glazing.

## Description

The present invention relates to a process for the production of a polyvinyl acetal film comprising a plasticized polyvinyl acetal film prepared by melt extrusion combined with multiple layers of a polyvinyl acetal film with no or very low amounts of plasticizer prepared by solvent casting as well as the use of such polyvinyl acetal films in structural glazing.

Interlayer films comprising polyvinyl acetals are long known as adhesive layers for laminating glass. Especially plasticized polyvinyl butyral (PVB) films are widely used as adhesive layers for glass-glass laminates, e.g. for architectural applications such as building windows.

Glass is being used more and more in today's architecture. Large-scale glass façades play a decisive role in this. Structural glazing differs from conventional glass façades in its appearance and construction. The individual glass elements are only separated from each other by fine shadow gaps or visible silicone joints. The entire façade presents itself as a smooth surface without interruptions. The insulating glass or parapet elements are not held in place by glazing beads or cover profiles.

In such structural glazing applications, strength, toughness and elasticity of the PVB interlayer films used for the glass laminates are of extremely high importance since the glass itself has to bear the load of the façade. In addition to these mechanical loads, the façade elements are also subjected to high thermal loads as they are usually directly exposed to the sunlight. In the case of breakage of the laminated safety glass in the described applications, the interlayer alone needs to be stiff enough to maintain the structural integrity of the element and prevent severe accidents, i.e. it needs to possess good so-called "post glass breakage properties".

In this context, polyvinyl acetal films with a high glass-transition temperature (Tg) and therefore, a high stiffness as expressed by a high storage modulus G' even at elevated temperatures would be advantageous.

In order to increase the Tg of the polyvinyl acetal films, the amount of plasticizer used could be reduced. To this end, Trosifol^{®} Extra Stiff PVB interlayer film with a reduced amount of plasticizer (as compared with conventional PVB sheeting products) is commercially available. This product is far more rigid than conventional PVB films and is therefore widely used in structural glazing.

However, reducing the amount of plasticizer also increases the melt viscosity of the polyvinyl acetal/plasticizer composition used in the melt extrusion process generally employed to prepare the interlayer films. This increase in viscosity leads to higher backpressure and shear forces, i.e. to harsher conditions in the extruder. These harsh conditions lead to partial degradation of the polyvinyl acetal and thus, to an increase in the yellowness of the product, which is inacceptable for the appearance of the glass façades. Thus, there is a natural lower limit with regard to the amount of plasticizer for the extrusion process. In addition, films with reduced plasticizer content in a thickness range required for structural glazing are more difficult to process, e.g. to wind into rolls, to cut and to lay-up in the glass lamination step.

In an alternative approach, polyvinyl acetal films can be prepared using the solvent casting process. A solution of the polyvinyl acetal and any other optional components is cast onto a carrier substrate and subsequently dried. After removing the carrier substrate, the polyvinyl acetal film is obtained. Since the process employs a solution and not a melt of the polyvinyl acetal, films with very low amounts or even no plasticizer can be prepared. However, the process is limited to rather thin polyvinyl acetal films, generally far below 100 µm, since the removal of the solvent (mixtures) in the drying step would take too long for an economically viable process for interlayer films with a thickness of between 500 and 1500 µm. Low drying rates are needed to prevent bubble formation and the risk of residual solvent contamination in the film would increase when attempting to produce films in such thickness ranges.

Therefore, there is still a need in the industry for a process to produce polyvinyl acetal interlayer films that have both an enhanced Tg, high storage modulus G' and at the same time an acceptable optical quality as measured by its yellowness index.

Accordingly, the objective of the present invention was to provide a film with improved characteristics, wherein the improvements include a higher rigidity, higher storage modulus, improved processibility, lower manufacturing costs and/or higher optical quality, especially in terms of less haze and/or less yellowness.

These and other problems have been solved by the present invention.

In a first aspect, the present invention concerns a process for the production of a polyvinyl acetal film comprising the steps of
a. preparing a film A comprising a first polyvinyl acetal and, plasticizer in an amount from 0 % by weight to 10 % by weight, by solvent casting,
b. preparing a film B comprising a second polyvinyl acetal and, plasticizer in an amount from 15 % by weight to 40 % by weight, by melt extrusion, and
c. combining at least one layer of film B prepared in step b with equal to or more than 4 layers of film A prepared in step a.

The amounts specified for the amounts of plasticizer and other ingredients in the separate films as well as all dimensions like thickness shall refer to the state "prior to lamination", i.e. refers to the state of the films A and B prior to having any contact to each other.

After the at least one film B and the several films A are brought into contact and especially after laminating the interlayer stack thus produced between two sheets of glass, the plasticizer starts to migrate from film(s) B to the films A until a state of equilibrium is obtained throughout the polyvinyl acetal interlayer. Especially in case the polyvinyl acetal is chemically the same in both films A and B, the process produces an interlayer which fuses into one interlayer after lamination.

Thus, it becomes possible by the inventive process to reduce the plasticizer content of a conventional film B by adding a certain number of solvent-cast, rather thin films A. By using a conventional, melt-extruded film B only, it would not be possible to reach such low amounts of plasticizer without severely lowering the optical quality of the interlayer. On the other hand, using a stack of solvent-cast films A only would not be economical in terms of drying time and number of films A required to produce an interlayer in the required thickness.

Additionally, both the plasticized film(s) B as well as the individual thin films A can separately be wound into rolls, cut and handled rather easily as compared to a thick, hard interlayer film.

Preferably, the at least one layer of film B is combined with equal to or more than 5 layers of film A, more preferably equal to or more than 10 layers of film A, even more preferably equal to or more than 15 layers of film A, most preferably equal to or more than 20 layers of film A and specifically equal to or more than 30. The number of layers of film A used depends on the amount of plasticizer in the film(s) B and the required final amount of plasticizer in the combined interlayer.

Also preferably, film A comprises plasticizer in an amount from 0 % by weight to 7.5 % by weight, more preferably from 0 % by weight to 5.0 % by weight, even more preferably in an amount of 0 % by weight to 2.5 % by weight and most preferably in an amount of 0 % by weight to 1.0 % by weight. Specifically, film A does not contain any added plasticizer.

Also preferably, the thickness of film A is from 10 to 100 µm, more preferably from 10 and 75 µm, even more preferably from 10 and 50 µm and most preferably from 10 to 25 µm.

Also preferably, the thickness of film B and in case of more than one film B, the combined thickness of the films B used, before lamination, is from 150 to 2000 µm, more preferably from 350 to 1500 µm, and most preferably from 700 to 1250 µm.

As described above, the amount of plasticizer in the combined interlayer film can be adjusted by using the appropriate number of individual films A. Preferably, the combined polyvinyl acetal film thus prepared comprises from 5 % by weight to 16 % by weight of plasticizer throughout the stack of films A and B, more preferably from 7.5 % by weight to 15 % by weight, and most preferably from 10 % by weight to 12.5 % by weight.

Also preferably, the thickness of the combined polyvinyl acetal film thus prepared is from 350 to 4000 µm, more preferably from 500 to 3500 µm, even more preferably from 750 to 3000 µm and most preferably from 1000 to 2000 µm.

Film A is produced by solvent casting. Such processes are described for example in WO 2022/063962. A solution of the polyvinyl acetal in a suitable solvent or solvent mixture is deposited onto a carrier substrate. Afterwards, the solvent (mixture) is removed by evaporation to produce film A on the carrier substrate. Film A can then be peeled off the carrier substrate before or after combining it with film B.

The material of the carrier substrate can be chosen from any material with is compatible with the polyvinyl acetal as well as with the production conditions. Preferably, the carrier substate contains polyethylene terephthalate (PET) and specifically, the carrier is a film consisting of PET.

Film A can be cut, e.g. by a steel die or by a laser, to its final size either before or after removal of the carrier substrate. Alternatively, a larger piece of film A can be folded once or several times to decrease the number of cutting steps required to arrive at its final size.

Plasticized film B is prepared by a conventional melt extrusion step known to the skilled person. Melting of the polyvinyl acetal resin powder is carried out at a temperature ranging from the melt temperature of polyvinyl acetal resin up to 260 °C. After the melting step, the extruding and cutting step follows. This step may be carried out by, for example, extruding the melt of polyvinyl acetal resin in the melt extruder followed by cooling and cutting it, or extruding it in the melt extruder into a water bath followed by cutting it. Alternatively, film B can be obtained commercially, e.g. Trosifol^{®} polyvinyl butyral films from Kuraray Europe GmbH.

Films A are preferably placed on each side of the film(s) B. Alternatively, a stack of films A can be in the centre of the combined interlayer with one film B on each side of the stack of the films A.

The inventive process is also suitable to introduce colours and/or other functionalities into the interlayer. For example, a conventional film B can be combined with one of more coloured films A or a film A with other functionality such as conductive wires or compounds blocking UV or IR radiation.

Alternatively, a coloured film B or a film B with other functionalities such as conductive wires or compounds blocking UV or IR radiation can be used in the inventive process in order to increase the rigidity of a coloured/functionalized film B.

Film A may contain alkali metal ions; lithium ions are preferred. The total amount of alkali metal salts may be as low as 0.005 % by weight based on the weight of film A. Preferred ranges of alkali metal salt are 0.01 % - 0.1 %; 0.02 - 0.08 %; 0.03 - 0.06 %, each weight % based on the weight of film A.

Film A may additionally comprise alkaline earth ions, but since their effect on adhesion is limited, relatively small amounts as compared to the alkali ion should be used. In a first embodiment of the invention film A comprises 0 to 100 ppm alkaline earth ions, preferably 10 to 50 ppm.

Preferably, the polyvinyl acetal of film A and film B are chemically identical to allow the combined interlayer to fuse into one film. However, films A and B may also contain chemically different polyvinyl acetals, each having a different polyvinyl alcohol content, degree of acetalisation, residual acetate content, molecular weight and/or different chain lengths of the aldehyde of the acetal groups.

The polyvinylacetal used in accordance with the invention results in particular from the reaction of at least one polyvinyl alcohol with one or more aliphatic unbranched compounds containing 2 to 10 carbon atoms. To this end, n-butyraldehyde is preferably used and the polyvinyl acetal is polyvinyl butyral.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

Independent of film A, the polyvinyl alcohol content of the polyvinyl acetals used in film B may be between 14 - 26 % by weight, 16 - 24 % by weight, 17 - 23 % by weight and preferably between 18 and 21 % by weight.

The polyvinyl alcohol content and proportion of polyvinyl acetate groups were determined in accordance with DIN ISO 3681 (Acetate content) and DIN ISO 53240 (PVA content).

The plasticiser in film B and - optionally - film A are selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.

- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

In addition, films A and B may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

In particular, film B may comprise 0.001 to 0.1 % by weight of alkaline metal salts and/or alkaline earth salts of carboxylic acids as adhesion control agent. It is preferred that film B contains magnesium ions in an amount of at least 10 ppm, preferably 20 ppm and most preferably 30 ppm.

The lamination step for producing a laminated glass is preferably carried out such that films A and B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

In another aspect, the current inventions concerns a polyvinyl acetal film comprising plasticizer wherein,
a. the thickness of the polyvinyl acetal film is from 350 to 4000 µm,
b. the total amount of plasticizer in the polyvinyl acetal film is from 5 % by weight to 16 % by weight, and
c. the yellowness index dYID of a test laminate prepared with the polyvinyl acetal film and measured according to the method described below is below 2.0.

Preferably, the yellowness index dYID is below 1.5, more preferably below 1.0, and most preferably, below 0.5.

Also preferably, the polyvinyl acetal film has a glass-transition temperature Tg measured according to the method described below from 48 ºC to 95 ºC, more preferably from 50 ºC to 90 ºC, even more preferably from 55 ºC to 85 ºC and most preferably from 60 ºC to 75 ºC.

Also preferably, the polyvinyl acetal film has a storage modulus G' at 1 Hz, 3 K/min and 50 °C measured according to the method described below from 10 to 750 MPa, more preferably from 20 to 600 MPa, and most preferably from 50 to 550 MPa.

The laminated glass according to invention may be used for any type of architectural glazing, especially for the production of structural glazing in glass floors and stairs, curtain walls or parapet glazing.

### Examples

### Film production

### Film A

A polyethylene terephthalate (PET) film with a matt surface (grade #50 - X42G commercially available from Toray Industries, Inc.) with a thickness of 50 um was used as carrier. The surface roughness (Rz) was 4.0 µm.

A 15.5 % by weight solution of polyvinyl butyral (PVB) powder (a 45:55 mixture of commercially available grades Mowital^{®} B30H and Mowital^{®} B75H) dissolved in a mixture of methanol / methyl acetate = 50:50 % by weight was used as coating fluid.

A commercially available standard solvent coating apparatus including an unwinder, a coater, a dryer and a winder was used in slot die coating mode. The substrate speed was 1.1 m/min and the wet thickness on the moving substrate was 200 um. The coating was conducted at a temperature of 26 °C. The gap between the coating lip and the moving substrate was 300 um.

The drying was performed in three sections and the respective temperatures in the drying sections were set to 60 °C, 70 °C and 125 °C. The total drying time was approximately 4 min.

The carrier film was peeled off to obtain film A with a thickness of 25 um.

### Film B

Films B (Film 1 and Film 2) were produced by melt extrusion using a Leistritz co-rotating twin-screw extruder with a screw length of 592 mm and a length/ diameter (L/D) ratio of 32. Throughput and screw speed were set to 3.5 kg/h and 550 1/min, respectively. In order to obtain a constant mass flow, a melt pump was used between extruder and feed block. The temperature profile of the extruder was 20 °C in the feed section, 220 °C in the plasticisation section and 250 °C in the metering section. The temperature of the melt pump and the feed block were both 250 °C and the die temperature was set to 220 °C. The same machine settings were used for both recipes. The resulting screw torque values of the extruder (in % of the maximum torque) and pressure values after the melt pump are listed in Table 1.

The films were extruded through a flat slit die with a slit width of 300 mm and cooled down by chill rolls. The thickness was adjusted by the speed of the chill rolls with a target of 380 µm. The compositions of the two films produced are shown in Table 1.

### Measurement methods - Laminates

### Laminate preparation

Test laminates were produced with conventional 2.1 mm automotive grade soda lime glass (Planiclear^{®}) in an autoclave containing the following steps: 30 min heating phase with pressurization up to 12 bar, 30 min hold time at 12 bar and 140 °C, and 30 min cooling down phase to 40 °C with concomitant release of pressure.

### L*, a*, b*, Y-Total

L*,a*,b* and Y-Total were measured with a HunterLab ColorQuest XE Spectrophotometer (commercially available from Hunter Associates Laboratory, Inc.) with luminant D65 and an observer angle of 10°.

### Yellowness Index YID

Yellowness Index was measured with a HunterLab ColorQuest XE spectrophotometer (commercially available from Hunter Associates Laboratory, Inc.) according to ASTM E 313 (Illuminant C, observer angle 2°). The Yellowness Index of the interlayer alone dYID was obtained by subtracting the YID of the two glass panes used.

### Haze

Haze was measured with a HunterLab ColorQuest XE spectrophotometer (commercially available from Hunter Associates Laboratory, Inc.) according to ASTM 1003, Procedure B (Illuminant C, observer angle 2°).

### Measurement methods - Films

### Storage modulus G' and glass transition temperature Tg

Storage modulus G' and loss factor tan δ were measured using a Anton Paar MCR 302 rheometer and a plate/ plate geometry (diameter: 8 mm). The frequency was set to 1 Hz and the heating rate to 3 K/min. The measurements were performed in the linear range of deformation between -20 and +150 °C. The glass transition temperature was taken from the tan δ maximum.

PET release film between the glass and the PVB interlayer was used during the autoclave cycle to prepare the film combinations listed in Table 2. After the autoclave process, the release film and glass were removed and the PVB sheet was pre-dried at 65 °C for 24 h before performing the mechanical tests.

### Results:

**Table 1: Monolayer films**

| **Recipe** | **Film 1** | **Film 2** |
|---|---|---|
| PVB resin / wt.-% | 91.5 | 72.5 |
| 3G8 / wt.-% | 8.5 | 27.5 |
| deionized water / wt.-% | 0.3 | 0.3 |
| Songnox 2450 PW / wt.-% | 0.0365 | 0.0365 |
| Mg - acetate / wt.-% | 0.0095 | 0.0095 |
| K - acetate / wt.-% | 0.0075 | 0.0075 |

| **Extrusion Parameters** | | |
|---|---|---|
| Screw torque / % | 28 | 22 |
| Pressure / bar | 48 | 17 |

| **Laminate properties** | | |
|---|---|---|
| Laminate structure | 2.1 mm float glass / 10 x Film 1 / 2.1 mm float glass | 2.1 mm float / 10 x Film 2 / 2.1 mm float glass |
| Combined interlayer thickness / µm | 3804 | 3803 |
| L* | 94.93 | 95.57 |
| a* | -3.58 | -1.62 |
| b* | 9.22 | 3.6 |
| dYID | 13.11 | 5.13 |
| Y Total | 87.84 | 89.13 |
| Haze / % | 0.58 | 0.2 |

Table 1 shows a comparison of a laminate using Film 1 comprising low amounts of plasticizer with a laminate using Film 2 comprising conventional amounts of plasticizer. As can be seen from the extrusion parameters given in Table 1, the low amounts of plasticizer in Film 1 lead to an increase of both the screw torque as well as the pressure and thus, to poor optical qualities as expressed by the yellowness values.

**Table 2: Film combinations**

| **Laminate properties** | **Reference 1** | **Example 1** |
|---|---|---|
| Laminate structure | 2.1 mm float glass / 3 x Film 1 / 2.1 mm float glass | 2.1 mm float glass / 1 x Film 2 / 34 x Film A / 2.1 mm float glass |
| Film thickness / µm | 1201 | 1201 |
| L* | 95.97 | 95.92 |
| a* | -1.66 | -0.83 |
| b* | 3.1 | 0.97 |
| dYID | 4.15 | 1.08 |
| Y Total | 90.05 | 89.86 |
| Haze / % | 0.19 | 0.07 |
| 3G8 / wt.-% (measured by gas chromatography) | 8.5 | 7.7 |

Next, laminates of the same thickness and comparable overall amounts of plasticizer were prepared. While Reference 1 comprises three layers of Film 1 produced by melt extrusion, Example 1 uses one layer of Film 2 with a conventional amount of plasticizer prepared by melt extrusion in combination with 34 layers of plasticizer-free Film A leading to a total amount of plasticizer in the film of 7.7 % by weight. The results of the yellowness show the superior optical quality of the combination of melt extruded and solvent cast films according to the invention.

**Table 3: Glass transition temperature and mechanical properties**

| | **Reference 1** | **Example 1** | **Trosifol^{®} Extra Stiff** |
|---|---|---|---|
| Tg / °C | 63 | 70 | 47 |
| G' (1 Hz, 3K/min) @ 50 °C / MPa | 282 | 507 | 2.2 |

Table 3 shows that the glass transition temperatures of Example 1 according to the present invention and Reference 1 are in a comparable range (also taking into account that Reference 1 contains slightly more plasticizer). However, the comparison with Trosifol^{®} Extra Stiff with a plasticizer content of 17 % by weight shows that Example 1 is superior to this product, which is specifically produced for applications, where a rigid interlayer is required. Example 1 also shows a substantial improvement with regard to the storage modulus when compared Trosifol^{®} Extra Stiff.

## Claims

1. A process for the production of a polyvinyl acetal film comprising the steps of
a. preparing a film A comprising a first polyvinyl acetal and, plasticizer in an amount from 0 % by weight to 10 % by weight, by solvent casting,
b. preparing a film B comprising a second polyvinyl acetal and, plasticizer in an amount from 15 % by weight to 40 % by weight, by melt extrusion, and
c. combining at least one layer of film B prepared in step b with equal to or more than 4 layers of film A prepared in step a.

2. The process according to claim 1 wherein film A comprises plasticizer in an amount from 0 % by weight to 1 % by weight.

3. The process according to claim 1 or 2 wherein the thickness of film B, before lamination, is from 150 to 1600 µm.

4. The process according to any one of the claims above wherein the thickness of film A is from 10 to 100 µm.

5. The process according to any one of the claims above wherein one layer of film is combined with equal to or more than 10 layers of film A.

6. The process according to any one of the claims above wherein the combined polyvinyl acetal film prepared in step c comprises from 5 % by weight to 16 % by weight of plasticizer.

7. The process according to any one of the claims above wherein the thickness of the combined polyvinyl acetal film prepared in step c is from 350 to 4000 µm.

8. A polyvinyl acetal film comprising plasticizer prepared according to the process of any one of claims 1 to 7 wherein,
a. the thickness of the polyvinyl acetal film is from 350 to 4000 µm,
b. the total amount of plasticizer in the polyvinyl acetal film is from 5 % by weight to 16 % by weight, and
c. the yellowness index dYID of the polyvinyl acetal film and measured according to the method described in the description is below 2.0.

9. The polyvinyl acetal film according to claim 8 wherein the glass-transition temperature Tg measured according to the method described in the description is from 50 ºC to 95 ºC.

10. The polyvinyl acetal film according to claim 8 or 9 wherein the storage modulus G' at 1 Hz, 3 K/min and 50 °C measured according to the method described in the description is from 10 to 750 MPa.

11. The polyvinyl acetal film according to any one of the claims 8 to 10 wherein the first polyvinyl acetal and the second polyvinyl acetal are chemically identical.

12. The polyvinyl acetal film according to any one of the claims 8 to 11 comprising equal to or more than 5 layers of film A.

13. A process for the production of a glass laminate comprising the process according to any one of the claims 1 to 7 and a subsequent step of laminating the polyvinyl acetal film between two sheets of glass.

14. A laminate comprising the polyvinyl acetal film according to any one of the claims 8 to 12 sandwiched between two sheets of glass.

15. Use of the laminate according to claim 14 for the production of structural glazing in glass floors and stairs, curtain walls or parapet glazing.
